# EUROPEAN PATENT APPLICATION

(11) **EP 1 303 102 A2**
(43) Date of publication of application: **16.04.2003**
(21) Application number: 02257082.4
(22) Date of filing: 11.10.2002
(51) Int. Cl.: H04L 29/06

(54) **User-centric session management for client-server interaction using multiple applications and devices**

(30) Priority: 12.10.2001 US 329225 P; 10.10.2002 US 269133
(71) Applicant: Openwave Systems Inc., Redwood City, CA 94063 (US)
(72) Inventor: Kjellberg, Rikard M., 117 29 Stockholm (SE); Lund, Tomas G., 352 42 Vaxjo (SE)
(74) Representative: Wombwell, Francis

(57) **Abstract**

A user-centric session management system and method are provided, in which a user remains authenticated and connected to a session while migrating between provisioning applications, protocols and/or client devices. Each user has a unique user identification (UI), and each session has a unique session identifier (USI). The USI supports anonymous users and maintains authentication without requiring authentication for each request. The system includes a session manager that accesses session state memory and virtual device memory. The session state memory provides short-term storage of records of all current client-server sessions, including USIs and associated Uls). The virtual device memory provides long-term storage of state mirroring the current state of a client device involved in a transaction during a session. Using the USI or UI and the virtual device associated therewith, the client device is synchronized at re-connect to an ongoing session or to an interrupted transaction associated with a terminated session.

## Description

### FIELD OF THE INVENTION

The present invention relates to computer networks, and more specifically, to provisioning of applications via computer networks.

### BACKGROUND

In modern computer networks, the various nodes interact in a client-server context over wired and wireless networks, via different protocols, using multiple applications and devices. The server in this context is a provisioning server that provides objects, i.e., content and applications, to requesting clients. Clients are arbitrary devices with network access and applications that enable them to interact with the provisioning server. For example, such devices may be personal digital assistants (PDAs), workstations, desktop computers, mobile phones, laptop computers, etc.

There are numerous techniques for provisioning objects to client devices. For example, an object can be transmitted to a device via different protocols, such as the short message system (SMS) or the wireless application protocol (WAP), via the Internet using the hypertext transfer protocol (HTTP) or, via some other protocol using a low-level bearer such as global system for mobile communications (GSM) networks. The objects themselves can also be of any of various types, such as ring tones, Java applications, video files or text messages.

In the provisioning process, there are four main stages. The first is the discovery stage, in which a client device is allowed to connect to a server, and the user can view a selection of objects and choose one or more objects from the selection. During this discovery step, the user is authenticated and a user session is established. The second stage is the download stage, where the object is fetched from the server and transmitted to the client device. In the third stage, installation of the object in the appropriate position within the client device occurs. The final stage is the execution stage, which involves the execution of the downloaded object in the runtime environment specific to the device in question. For example, in the execution stage, the object may be an application that starts running, a video-file that is displayed or a text message that is displayed or communicated over another user interface.

The discovery stage is handled by a discovery application, which allows the user to select one or more objects for download. The download stage is handled by a download application, which receives an object descriptor, e.g., a uniform resource locator (URL) for the selected object or application, from the discovery application for use in downloading the selected object or application. The installation and execution stages are handled by a runtime environment application that is capable of accepting the object or application, installing the object or application and executing the object or application.

Therefore, the different stages of provisioning can take a number of different paths, and involve several different client applications. In some cases, the discovery application and download application are provided by the same client application. For example, the client device can use a web browser for both the discovery and download of Applets. In other cases, the client device may use two separate applications for download and discovery. If the discovery application and the download application are separate, the discovery application passes the object descriptor to the download application, but it may not pass the session itself. As an example, the client could be a Java enabled MIDP/CLDC device that uses a WAP browser for discovery and a Java application manager for download.

In addition to the fact that client devices may use separate applications for discovery and download, different applications often communicate using different communication protocols (sometimes referred to as channels). For instance, the MIDP/CLDC device's WAP browser interacts via the WAP protocol, and the Java application manager receives the downloading via the HTTP protocol. Existing session-oriented technology is tightly coupled with a specific communication protocol. A session is established when a connect request is sent by a client and terminated when the communication protocol breaks the connection. Therefore, each protocol or channel involved in the provisioning process initiates a separate client-server session.

Consequently, when a client device has different applications using different protocols for discovery and download, multiple session-initiation and session-termination transactions occur. For example, a discovery application may initiate a session, browse and select an object, receive the object descriptor, and after receiving the object descriptor, terminate the session. In order to download the selected object, the discovery application hands over the object descriptor to the download application, which in turn, must initiate a new session with the server to download the selected object.

Upon the initiation of each session, a separate authentication process takes place. Authentication is a security measure that allows providers to control access to the server. For example, the user is usually authenticated during the initial access to the provisioning server. Authentication can be done via a login system, or automatically if the system can retrieve authentication information from some other source, such as a cellular network. Once authenticated, the user is connected to a provisioning session. When the discovery application is terminated, and a new session is initiated for the download application, authentication is again prompted during the same provisioning process. This is burdensome on the user and an inefficient usage of network resources.

To avoid duplicative authentication procedures, some protocols have considered the concept of session handover, in which one application hands over the current session to another application. Alternatively, to ease the burden on the user to manually re-authenticate during subsequent stages of the provisioning process, the provisioning server can upload "cookies" containing information regarding the session ("session information") to the client device. Later, as the client reconnects to the server or initiates a new session, the server immediately requests all possible cookies that may reside on the connecting client. If a relevant cookie is found, the session is initiated using the session information and authentication information that is contained in the cookie to eliminate manual redundancies.

However, these conventional approaches have limited potential to solve the problems concerning authentication and session management. For example, there are many client devices that do not support either session handover or cookies, which are normally limited to web browsers. In addition, neither session handover nor cookies can be used if discovery and download applications use different protocols, e.g., cookies are restricted to the HTTP protocol. Furthermore, no mechanism exists that allows the user to migrate between different client devices without terminating the ongoing session. Likewise, if the session is interrupted during a download transaction and the user reconnects using a different protocol, no mechanism exists that ensures completion of that transaction. Therefore, a mechanism is needed to provide "persistent" sessions capable of supporting multiple applications with multiple protocols on multiple devices.

### SUMMARY

The invention includes a method and a corresponding apparatus, where the method includes establishing a session associated with a client device operated by a user and a server, terminating the session, and then re-establishing the session in a user-transparent manner.

Other features of the present invention will be apparent from the accompanying drawings and from the detailed description which follows.

### BRIEF DESCRIPTION OF THE DRAWINGS

The disclosed invention will be described with reference to the accompanying drawings, which show sample embodiments of the invention and which are incorporated in the specification hereof by reference, wherein:
FIG. 1 is a block diagram of a provisioning server that provides objects to requesting clients;
FIG. 2 shows a process flow for discovering, downloading and executing an object;
FIG. 3 is a flow chart illustrating a process for initiating a session;
FIG. 4 illustrates the interaction between the session manager and the session state memory and virtual device memory; and
FIG. 5 is a flow chart illustrating a process for synchronizing a client with an ongoing session or interrupted transaction.

### DETAILED DESCRIPTION

The numerous innovative teachings of the present application will be described with reference to particular embodiments. However, it should be understood that these embodiments are only examples of the advantageous uses of the innovative teachings herein. Note that statements made in the specification of the present application may apply to some inventive features, but not to others.

As described in greater detail below, a user-centric session management system and method are introduced herein, in which a user remains authenticated and connected to a session while migrating between provisioning applications, protocols and/or client devices. Each user has a unique user identification (UI), and each session has a unique session identifier (USI). The USI supports anonymous users and maintains authentication without requiring authentication for each client request. The system includes a session manager that accesses session state memory and virtual device memory. The session state memory provides short-term storage of records of all current client-server sessions, including USIs and associated UIs. The virtual device memory provides long-term storage of state that mirrors the current state of a client device involved in a transaction during a session. Using the USI or UI and the virtual device associated therewith, the client device is synchronized at re-connect to an ongoing session or to an interrupted transaction associated with a terminated session.

With the introduction of the mobile Internet, the communication landscape is permanently changing from a predominantly homogeneous environment, where all user devices generally had the same characteristics and capabilities, regardless of brand and type, to a heterogeneous environment, with a number of different types of user devices, ranging from desktop computers to handheld communication devices, and a number of different types of networks, ranging from fiber to wireless. Due to the ubiquity of user devices, particularly in countries that do not have an extensive "wired" landscape, a majority of the user devices accessing the Internet will have wireless connectivity, limited processing capabilities, limited memory and limited user interfaces.

Therefore, it is becoming desirable to expand the usability of the client (user) device by allowing it to become more than just a web browser. With a web browser, a user can view and interact with content. However, if software can be downloaded to the client device in real-time, the client device can become an integrated part of an application. With the application running on the client device, more responsive, interactive and dynamic applications can be realized. In addition, data communication can be reduced, which reduces consumption of wireless bandwidth and prolongs battery life in handheld devices. Furthermore, software version control becomes a non-issue, since the client software can be updated the next time the client interacts with the server.

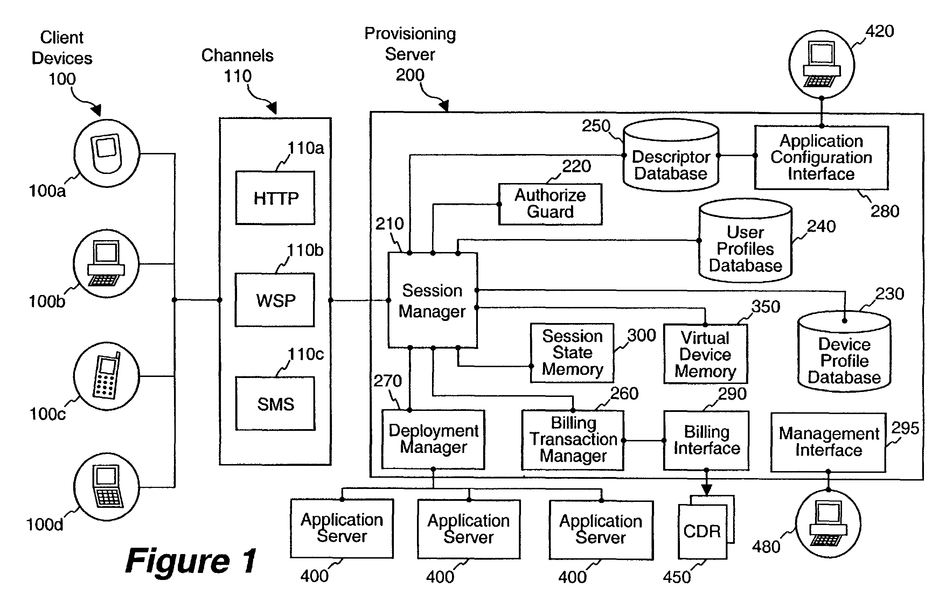

With reference now to FIGURE 1 of the drawings, there is illustrated a provisioning server 200 capable of provisioning objects and applications to client devices 100 in real-time. As noted above, provisioning is the capability to receive a request for an application or object, find a suitable version of the requested application or object and provide the application or object to the requestor. The ability to find a suitable version of the requested application or object accounts for the different formats utilized by the many different types of client devices 100, each with its own characteristics, limitations and configuration. For example, the client devices 100 may include PDAs 100a, workstations and desktop computers 100b, mobile phones 100c and laptops 100d. The characteristics and configurations of each of the different types of client devices 100 are stored in a device profiles database 230 within the provisioning server 200.

An application configuration interface 280 serves as a single-point entry into the provisioning server 200 for application providers 420. The application configuration interface 280 allows application providers 420 to configure new services (objects or applications), device type profiles and billing rules specific to the application that is being published through the provisioning server 200. Application descriptors associated with the configured objects or applications, along with the device type profiles and billing rules, are stored in a descriptor database 250. The applications or objects themselves are stored in various application servers 400 accessible to the provisioning server 200.

The application servers 400 may be located in any location and may be connected to the provisioning server 200 through any available network. Advantageously, the provisioning server 200 offers platform neutrality, allowing application developers to develop and deploy their applications on application servers 400 of their choice, then configure and publish the applications through the provisioning server 200. Thus, the provisioning server 200 does not require the applications to conform to any specific application programming interface (API).

Each client device 100 may access the provisioning server 200 through any of a number of different channels 110 that are available to the client device 100. Each channel 110 defines specific protocols for user authentication, application discovery and application downloading. Examples of these protocols include HTTP 100a, which can be used to carry HTML to web browsers and extensible markup language (XML) to XML browsers, wireless session protocol (WSP) 110b, which can be used to carry wireless markup language (WML) to WAP browsers, and SMS 110c, which is used to carry SMS messages to SMS applications within mobile phones 100c. Each client device 100 accesses the provisioning server 200 through a session manager 210 that authenticates the user and manages the session. The session manager 210 performs authentication and management functions by updating and accessing both a session state memory 300 and virtual device memory 350 during a session. The session state memory 300 is a short-term memory that includes records of all current client-server sessions. The virtual device memory 350 is a long-term memory that mirrors the current state of a client device 100. Furthermore, during a session, the session manager 210 responds to an authorize guard 220 that is responsible for ensuring that each user is authenticated at all times.

A user profiles database 240 maintains user preferences, such as the presentation of an application menu based on device type, most frequently accessed products, current location and other contexts. For example, one user may prefer games listed first, while another user may prefer that only financial applications be listed. As another example, a user may desire certain applications be listed while the user is in certain locations or using certain client devices. The user profiles database 240 may be stored within the provisioning server 200 or at another location. The session manager 210 uses the user profiles database 240, device profiles database 230 and descriptor database 250 to construct the application menu. Therefore, the application menu is capable of being specific to the type of client device 100 and the user profile preferences. The application menu provides the user with a selection of products that hide technical implications, allowing selection to be based solely on product functionality.

Once an object or application has been selected by the user from the application menu, the session manager 210 instructs a deployment manager 270 to fetch the requested object or application from the appropriate application server 400 and provide that object or application to the client device 100. The deployment manager 270 packages the selected object or application in a format suitable for the device type 100, based on client device type information provided by the session manger 210, and transmits the object or application to the client device 100 via the session manager 210. The deployment manager 270 can package the applications and objects as midlets (J2ME), applets, Java applications (J2SE), native code applications, web URLs, WAP URLs, SMS messages or any other required format. Advantageously, the provisioning server 200 makes the application servers 400 transparent to the user, and therefore offers great flexibility in deployment of services, while also creating maximum user value by allowing each application to execute in its optimum environment.

A billing interface 290 is connected to a billing transaction manager 260 responsible for collecting billing information and generating a bill for the provisioning server operator. The billing transaction manager 260 is accessed by the session manager 210 when a billing event occurs (e.g., when the user selects an application or object for download or when the application or object is actually downloaded to the user). It should be understood that each application may have a unique billing model. For example, one application (e.g., a scientific calculator) may be downloadable a finite number of times after initial payment, whereas another application (e.g., a game of chess) may be billed per session, regardless of how many times the user transitions between devices. Therefore, the session manager 210 must retrieve the billing rules for the application from the descriptor database 250 and pass these billing rules onto the billing transaction manager 260. In addition, the user profile may also affect what fee, if any, is charged for downloading an application or object. For example, the user may have a subscription with the provisioning server operator and/or the application provider that limits or otherwise modifies the fee. Thus, the session manager 210 must also retrieve the billing user preferences from the user profile database 240 and pass these billing user preferences onto the billing transaction manager 260.

Once an application or object has actually been downloaded to the user, the billing transaction manager 260 provides customer data records (CDR) 450 to the billing interface 290, which communicates these CDRs 450 to the user. The CDRs 450 may be transmitted directly to the user from the provisioning server operator or through an intermediate party. For example, the provisioning server 200 may establish a billing relationship with a telecommunications provider or ISP associated with the user to enable billing of the user. Such billing relationship information may be stored in the user profile database 240 or within the billing transaction manager 260 itself. A management interface 295 allows a provisioning server operator 480 to update, modify or otherwise access the elements of the provisioning server 200 described above.

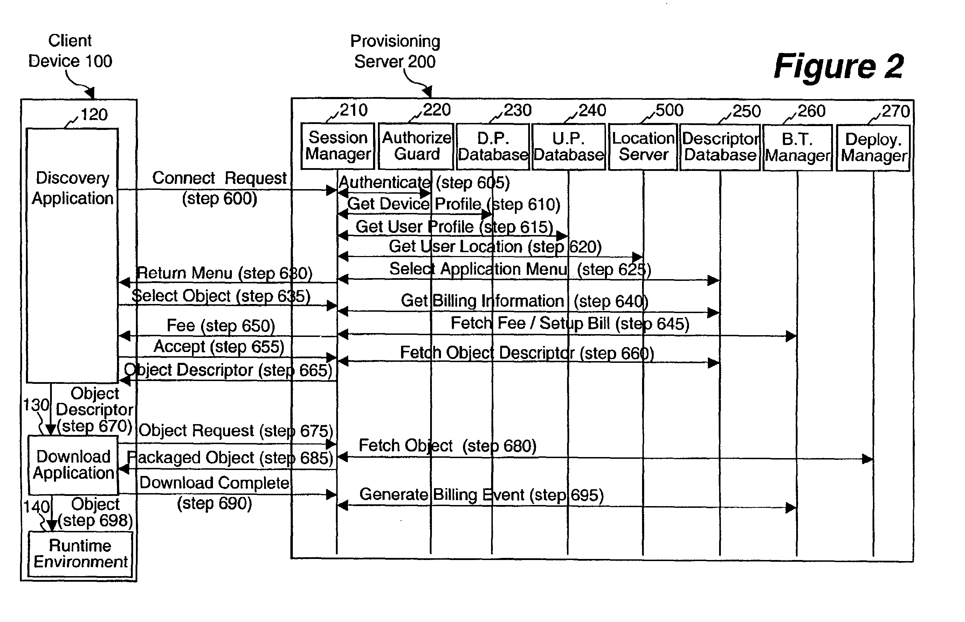

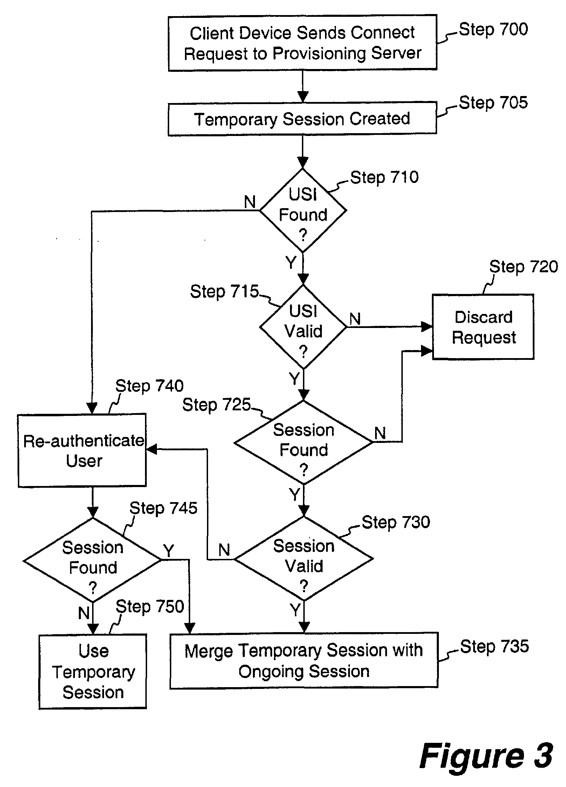

Referring now to FIGURE 2 of the drawings, the following description illustrates the three stages of the provisioning process: discovery, download and execution. Initially, during the discovery stage, a discovery application 120 within the client device 100, such as a web browser, a WAP browser or some proprietary mechanism, initiates a session by sending a connect request (step 600) to the session manager 210 of the provisioning server 200. Upon connection, the session manager 210 authenticates the user (step 605) via the authorize guard 220. The authorize guard 220 supports single-sign-on, which means that if the user is accessing the provisioning server 200 via a cell phone, authentication is performed via the cellular network rather than requesting user name and password. The authorization process is described in more detail below in connection with FIGURE 3.

Once the user is authenticated, the session manager 210 fetches: (a) the device profile of the client device being used (step 610) from the device profile database 230, (b) the user profile of the user (step 615) from the user profile database 240, and (c) the user location (step 620) from a location server 500 (if applicable). It should be understood that the location server 500 may be located within a different network or on a different server than the provisioning server 200. Based on this information, an application menu is created (step 625) by the session manager 210 in conjunction with the descriptor database 250 and returned to the user (step 630). The application menu can contain various types of objects, such as ring tones, video files or text messages, and/or one or more applications.

Once an application or other object has been selected for download by the user (step 635), the session manager 210 acquires billing information (step 640) from the user profile database 240 and descriptor database 250 and passes this billing information to the billing transaction manger 260 to calculate the fee (step 645) for the selected application or object. The billing transaction manager 260 stores the billing information for later use in creating the CDR, if the user downloads the application or object. Thereafter, the calculated fee is transmitted to the user for acceptance (step 650). If the user accepts the charges (if any) that will be incurred (step 655), the session manager 210 fetches an object descriptor (step 660) from the descriptor database 250 and returns this object descriptor (step 665) to the discovery application 120 within the client device 100.

During the download stage, the object descriptor is passed (step 670) to the download application 130 within the client device 100 for use in requesting the object file from the provisioning server 200. The download application 130 will typically use a download protocol, for example, the MIDP over-the-air (OTA) protocol, Java network launch protocol (JNLP) or any other Internet download protocol, to retrieve the object. Upon receiving an object request (step 675), the session manager 210 instructs the deployment manager 270 to retrieve the requested object (step 680). The deployment manager 270, in turn, retrieves the requested object from the appropriate application server 400 (shown in FIGURE 1) and packages the requested object in a format suitable for the device type. Thereafter, the packaged object is downloaded (step 685) to the download application 120 within the client device 100 via any suitable protocol, such as SMS or WAP, via GSM networks, or via the Internet using HTTP.

Once the download is successfully completed, the download application 130 within the client device 100 notifies (step 690) the session manager 210, which completes the transaction by instructing the billing transaction manager 269 to generate the CDR (step 695), for example. Finally, during the installation and execution stages, the download application 130 hands over the downloaded object file (step 698) to the runtime environment 140, which could be a J2ME runtime environment, an applet sandbox or some other environment capable of handling the object.

To avoid duplicative authentication procedures and to enable migration between different devices, applications and protocols, each session can be considered user-centric, which means that the session follows the user while migrating between applications, communication protocols and/or devices. Each user is assigned a unique user identifier (UI) and each session is assigned a unique session identifier (USI). A single UI can be assigned to only one USI. Therefore, a user can be synchronized with an ongoing session using either the UI or the USI. The purpose of using both the UI and USI is to support anonymous but uniquely identifiable sessions. Furthermore, once a session is established, the session is detached from the communication protocol so that a form of a session handover can be performed to another application that supports a different protocol. However, if a user initiates a session without providing authentication information, the user is treated as an anonymous user. Anonymous users only have access to services associated with the anonymous user group (i.e., public services). Each anonymous user is provided a unique USI, but no UI. Therefore, anonymous users can only be uniquely identified by the server through the USI.

FIGURE 3 of the drawings is a flow chart that illustrates a process for initiating a session. When a client device initiates a session by sending a connect request to the provisioning server (step 700), the session manager creates a temporary session (step 705). The connect request could be an explicit connect or simply the first request received from a device not currently associated with a session. If the connect request is associated with an ongoing, inactive session, the temporary session is merged with the ongoing session; if not, the temporary session is converted into a new user session and assigned a new USI. After the temporary session is created, the session manager searches for a USI associated with the connect request (step 710). For example, the USI could be hidden in a URL or stored on the client device as an HTTP cookie. If the USI is found, the USI may be validated using any syntactical verification method (step 715). Examples of such methods include checksum calculations, encryption and conforming to specific patterns. If the USI is not valid, the request is discarded (step 720). Alternatively, the validation step can be omitted.

Once the USI has been verified for syntax (step 715), the session manager uses the USI to determine the user session associated with the USI. If a session is not found (step 725), the request is discarded (step 720). If a session is found (step 725), and the connect request contains the identical information (i.e., UI, source IP-address and port, etc.) to what was previously used during authentication, the session is valid (step 730), and the session manager merges the temporary session with the ongoing session (step 735). However, if the information in the connect request does not match the previous information (step 730), re-authentication is invoked (step 740).

If the connect request does not have a USI associated with it, the connect request is sent to the authorization guard for authentication (step 740). For example, the user could enter a user name and password, or some other information that uniquely identifies a user. Once authenticated, the session manager uses the UI to locate an ongoing session (step 745). The UI is used to re-connect to an ongoing session primarily when the user changes client devices, and thus the USI is not readily available, or if the client device does not support the USI.

If a session associated with the UI is found (step 745), the USI is fetched, and the session manager merges the temporary session with the ongoing session (step 735). If an ongoing session is not found (step 745) or the user is an anonymous user, a new USI is created and assigned to the temporary session, turning the temporary session into a new user session (step 750). The connect request is attached to the new session and the provisioning server proceeds to process the connect request, as described above in connection with FIGURE 2.

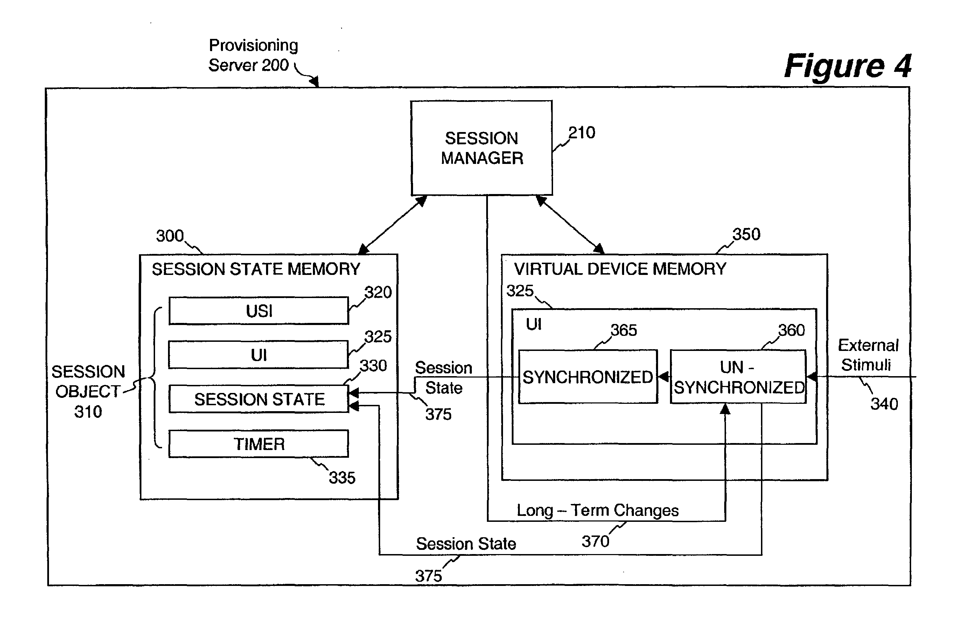

In order to implement the user-centric session management described above in FIGURE 3, the provisioning server 200 can maintain records of all client-server sessions. The records ensure that the session information is persistent and not lost as communication protocol sessions are closed. As shown in FIGURE 4, each of the ongoing client sessions is maintained in the session state memory 300, which has short-term storage capabilities. To ensure the persistency of client-server sessions, the sessions need only survive as long as it may take for the user to reconnect and resume the original, ongoing session. Therefore, all sessions are time-tagged, such that authenticated users can only be re-connected to ongoing sessions if the re-connect takes place before the session is timed out. The session state memory 300 stores one or more session objects 310, each of which holds information, such as the USI 320, associated UI 325, session state 330 (i.e., whether there are any long-term changes that remain unsynchronized in the virtual device memory) and timer 335 value. The value of the timer 335 may be set by the provisioning server operator or may be variable, depending, for example, upon the user profile, communication protocol or device profile.

A connect request results in either a new session object with a new USI that is stored in session state memory 300, or in a re-connect to an existing session object 310 in the session state memory 300. As mentioned above, the session manager 210 can determine whether a connect request is a re-connect to an existing session object 310 in two ways: (1) the session manager 210 can extract a USI 320 associated with an existing session object 310 in session state memory 300 from the connect request, which automatically re-authenticates the user; or (2) the session manager 210 can authenticate the client and determine whether the UI 325 of the user is linked to an existing session object 310 in session state memory 300.

Any long-term changes 370 to the state of a client device associated with a UI 325 are loaded into the virtual device memory 350. Long-term changes 370 can include, for example, when a client device accepts charges for an object or application to be downloaded, and the object or application is about to be downloaded, or when external stimuli 340, such as customer care (e.g., customer updates), needs to be applied to the client device. The virtual device memory 350 has long-term storage capabilities (i.e., it never times-out) for holding information about one or more client device configurations associated with the UI 325 and all of the applications and objects that have been downloaded to the UI 325. Any time an action leads to a change in client device state, that change is first reflected in the virtual device memory 350 in the provisioning server 200. The state changes are initially stored as unsynchronized changes 360, waiting for the download to be confirmed by the client. When the confirmation arrives, the state changes are stored as synchronized changes 365, and the session state 330 in the session state memory 300 is updated accordingly. The synchronized device state reflects (mirrors) the client device state. However, it should be understood that the virtual device memory is not used for anonymous users, since anonymous users are not registered in the user profile database, and therefore, are not billed for a session.

The virtual device memory 350 and session state memory 300 allow the provisioning server 200 to securely manage migration and even abnormally disrupted sessions. For example, if a user requests a download of an object, using download application "X", the object is first "loaded" into the virtual device memory 250 as unsynchronized changes 360. If the downloading transaction is interrupted (e.g., the client disconnects, or switches application/protocol/device), leaving unsynchronized changes 360 in the virtual device memory 350, the session manager 210 may automatically attempt to synchronize the client device by resuming the interrupted actions whenever the client re-connects to the session or initiates a new session (if the current session times out). The synchronizing and mirroring capability provides session handover transparency, which enables session handover even if the client device or application does not support session handover.

The following is a working example. A user has selected an application for download via a browser discovery application and accepted a charge for the application. Upon acceptance, the client device is expected to change from the browser discovery application to a download application to complete the process. At the same time, the session manager has retrieved the application and registered the application in the virtual device memory. However, the connection for some reason is terminated at this point, and the application is not downloaded and installed. Since the application is stored in the virtual device memory, it is safe to generate a charge (CDR) for the application. The next time the user accesses the provisioning server, the client device is synchronized with the virtual device memory, thus resuming the previously interrupted download.

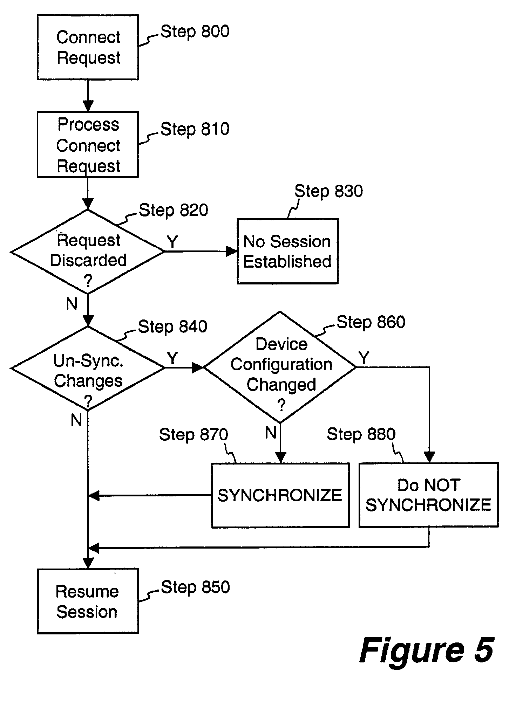

Referring now to FIGURE 5, a process for synchronizing a client device with an ongoing, inactive session or interrupted transaction is illustrated. When a user enters the URL (connect request) to the web server component of the provisioning server on the user's client device (step 800), the session manager processes the connect request (step 810), as described above in connection with FIGURE 3. If the connect request is discarded (step 820), no session is established (step 830). As mentioned above, the connect request may be discarded if the enclosed USI is not verified (e.g., the checksum differs) or a verified USI points to a non-existing session (e.g., the session has timed out).

However, if the connect request is not discarded (step 820), and therefore, the client device is either merged with an ongoing session or establishes a new session (steps 735 or 750 in FIGURE 3), the session manager accesses the virtual device memory to determine if there are any long-term changes associated with the UI that remain unsynchronized (i.e., ordered downloads that are not confirmed as successfully completed by the client). If there are no unsynchronized changes in the virtual device memory for the UI (step 840), the current session (new or ongoing) is resumed (step 850). Resuming a session results in a provisioning server response, such as a view with available applications, represented as links.

If there are unsynchronized changes in the virtual device memory for the UI of the user (step 840), the session manager determines whether the current client device that the user is using is capable of downloading the changes. If so (step 860), the session manager prompts the client device to complete the download of the unsynchronized changes (step 870), and the session resumes (step 850). If not (for example, if the user has migrated to a client device having a different configuration than the original client device) (step 860), synchronization is postponed (step 880) until the user re-connects again with a client device capable of accepting the unsynchronized changes, and the session is resumed (step 850). Alternatively, if the user wants to complete the download to the new client device, the user, upon resuming the session, may select the same object or application for download, and the session manager, with knowledge of the pending unsynchronized download in the virtual device memory, may give the user the option of canceling the unsynchronized download.

As will be recognized by those skilled in the art, the innovative concepts described in the present application can be modified and varied over a wide range of applications. Accordingly, the scope of patented subject matter is not limited to any of the specific exemplary teachings discussed, but is instead defined by the following claims.

## Claims

1. A method comprising:
establishing a session associated with a client device operated by a user and a server; and
terminating the session; and
re-establishing the session in a user-transparent manner.

2. A method as recited in claim 1, further comprising:
storing state information associated with the session;
wherein said re-establishing the session in a user-transparent manner comprises re-establishing the session using the stored session state information.

3. A method as recited in claim 1, further comprising:
associating a unique user identifier with the user;
associating a unique session identifier with the session
associating the unique session identifier with the unique user identifier; and
storing the unique session identifier and the unique user identifier in a session state memory.

4. A method as recited in claim 1, further comprising:
authenticating the user in association with establishing the session;
wherein said re-establishing the session comprises re-establishing the session without re-authenticating the user.

5. A method as recited in claim 1, wherein the session is independent of a particular device used by the user.

6. A method as recited in claim 1, wherein the session is independent of a protocol used to communicate with the client device.

7. A method as recited in claim 1, wherein the session is an anonymous but uniquely identifiable session.

8. A method as recited in claim 1, wherein said establishing a session comprises:
associating a unique user identifier with the user;
associating a unique session identifier with the session
associating the unique session identifier with the unique user identifier; and
storing the unique session identifier and the unique user identifier in a session state memory.

9. A method as recited in claim 8, further comprising:
storing state information associated with the session;
wherein said re-establishing the session in a user-transparent manner comprises re-establishing the session using the stored session state information.

10. A method as recited in claim 8, further comprising:
authenticating the user in association with establishing the session;
wherein said re-establishing the session comprises re-establishing the session without re-authenticating the user.

11. A method as recited in claim 8, wherein the session is independent of a particular device used by the user.

12. A method as recited in claim 8, wherein the session is independent of a protocol used to communicate with the client device.

13. A method as recited in claim 8, wherein the session is an anonymous but uniquely identifiable session.

14. A system comprising:
a session state memory to store a user identifier that uniquely identifies a user of a client device and a session identifier that uniquely identifies a session between the client device and a server;
a virtual device memory to store information representing a current state of the client device; and
a session manager to establish the session between the client device and the server, to re-establish the session in a user-transparent manner after the session has been terminated by using the session identifier, and to synchronize the client device with the session after the session is re-established.

15. A system as recited in claim 14, further comprising a deployment manager to retrieve a target entity requested by the client device during the session and to package the target entity in a manner suitable for the client device.

16. A system as recited in claim 14, wherein the client device is a mobile device that operates on a wireless network.

17. A system as recited in claim 14, wherein the session manager further is to authenticate the user in association with establishing the session; and
wherein the session manager re-establishes the session without re-authenticating the user.

18. A system as recited in claim 14, wherein the session manager re-establishes the session with a device used by the user other than said client device.

19. A system as recited in claim 14, wherein:
the system uses a first communication protocol to communicate with the client device during the session prior to said termination of the session; and
the system uses a second communication protocol to communicate with the client device upon said re-establishment of the session, the second communication protocol not having been used during the session prior to said termination of the session.

20. A system as recited in claim 14, wherein the session is an anonymous but uniquely identifiable session.
